# EUROPEAN PATENT APPLICATION

(11) **EP 1 327 965 A1**
(43) Date of publication of application: **16.07.2003**
(21) Application number: 02380268.9
(22) Date of filing: 18.12.2002
(51) Int. Cl.: G07F 7/10, G07C 9/00

(54) **User identification system for automatic vending machines**

(30) Priority: 10.01.2002 ES 200200051
(71) Applicant: JOFEMAR, S.A., 31350 Peralta (Navarra) (ES)
(72) Inventor: Guindulain Vidondo, Félix, 31350 Peralta (Navarra) (ES)
(74) Representative: Ungria Lopez, Javier

(57) **Abstract**

User identification system for automatic vending machines, being useful in all types of coin-operated automatic vending machines, and especially in cigarette vending machines and slot machines, which are provided with a control and operating system controlled by a microprocessor in such a way that the user identification system comprises the inclusion of a chip-type card (3) reader (2) with electronic memory and a fingerprint detecting device (4) in an automatic vending machine (1). The reader and the device are connected to the electronic control and operating system of the machine itself, whose chip-type cards (3) include, stored in their memory, at least one fingerprint of the holder of the card.

## Description

As expressed in the title of the present specification, the following invention refers to a user identification system for automatic vending machines, which is especially useful to identify users of coin-operated automatic vending machines, in such a way that by means of the proposed system, a control of the users is carried out in such a way that in order for the machine to be activated and operate normally with the insertion of coins, an identification or recognition of the user should have been previously carried out.

Hence, in a special use of the system that is presented, it is a question of identifying the users who are going to use automatic cigarette vending machines, for the purpose of preventing people younger than 18 from buying cigarettes.

Likewise, the system is especially of interest to be included in slot machines, in such a way that in this case it is a question of preventing people younger than 18 from playing on the slot machines.

Of course, the system that is presented can be useful to identify users of all types of electronic cards prior to their use for any purpose, and, thus, the system can be useful with credit cards and debit cards, in automatic teller machines, etc.

### FIELD OF USE

The user identification system for automatic vending machines is useful in all types of coin-operated automatic vending machines, and is especially useful in machines whose use is limited to people older than 18, such as cigarette vending machines and slot machines, in order to prevent people younger than 18 from being able to use such machines.

Likewise, the system that is presented can be useful to identify users of all types of electronic cards prior to their use for any purpose, and thus, they can be useful with credit cards and debit cards, in automatic teller machines, etc.

### BACKGROUND OF THE INVENTION

Conventionally, numerous cigarette vending machines are installed in public premises and public places in general. Users have direct access to these machines, in such a way that by inserting the correct amount, the desired cigarettes can be purchased, without at times there being any person supervising the use of the machine.

Hence, it is also frequent that on numerous premises the supervisor or person in charge cannot be continuously watching the users of the automatic cigarette vending machine and hence it is relatively easy for people younger than 18 to purchase cigarettes.

This is so, given that automatic cigarette vending machines validate coins directly as the coins are being inserted into the machine.

Likewise, slot machines, to be used by people who are 18, have the same inconvenience as cigarette vending machines, since they do not have any restrictive system and hence, it is also relatively easy for people younger than 18 to play said slot machines.

For the purpose of restricting the sale of cigarettes different means have been thought up, and, hence, we can cite patent of invention P9801480 which describes and claims a vending machine, and more specifically a cigarette vending machine, which includes a radiofrequency receiver to receive the waves emitted by a radiofrequency transmitter, in such a way that when a user wishes to purchase a product from the cigarette vending machine he pays the person in charge of the premises the amount of the product, in such a way that when the radiofrequency transmitter is activated, the radiofrequency receiver of the machine receives the order to activate the production selection mechanism so that the user selects the desired product.

In this case, the cigarette vending machine lacks the selector and it is the person in charge of the premises who activates the selection mechanism by means of using a remote control, in such a way that in this case there is a certain control by the person in charge of the premises where the machine is installed, but it also has the inconvenience that on occasions the person in charge of the premises cannot directly see the machine and hence when the machine is activated a third person may be the one who selects the product.

Likewise, we can cite Patent of Invention P200001978 which describes a system for the activation of the coin selector for cigarette vending machines, being of the type of cigarette vending machines that are coin-operated and which have a coin selector that validates the coins when being inserted. The system comprises means for the activation of the selector of the machine for a certain amount of time, for the recognition of the coins inserted to purchase the desired product, supervising and controlling the sale of cigarettes.

The activation means of the coin selector system are defined by a token of specific characteristics stored in the memory of the electronic control and operating system of the machine, which when the token is inserted and recognized by the selector, the selector is activated for a certain amount of time, for the validation of coins and the dispensing of a single product, guaranteeing that the person who removes the product is the person who has inserted the token.

The coin selector of the machine solely and exclusively validates coins if the activation token of the coin selector system has been previously inserted and recognized, guaranteeing that only people over legal age purchase cigarettes from the person in charge or the supervisor of the premises, since this person has been given the corresponding token for activating the selector for coin validation.

Supervision and control of cigarettes sales are defined by the coin selector activation token itself upon being provided for by the person in charge of the premises where the cigarette vending machine is installed. Then the token is stored away once it has been recognized by the selector in a money box of the machine itself, without the possibility of returning to the receiving box.

### DESCRIPTION OF THE INVENTION

The present specification describes a user identification system for automatic vending machines, being useful in all type of coin-operated automatic vending machines, and especially in cigarette vending machines and slot machines, which are provided with a control system controlled by a microprocessor in such a way that the user identification system comprises the inclusion of a chip-type card reader with electronic memory and a fingerprint detecting device in an automatic vending machine. The reader and the device are connected to the electronic control and operating system of the machine itself, whose chip-type cards include, stored in their memory, at least one fingerprint of the holder of the card.

Storage of at least one fingerprint of a holder on the corresponding chip-type card with an electronic memory is controlled to store authorized users' fingerprints, in other words, when the corresponding fingerprint is stored on a chip-type card with electronic memory, a check will be made to make sure that the user meets all requirements.

On the other hand, in order to identify a user's fingerprint, the user will insert his chip-type card with a least one fingerprint stored in its electronic memory in the reader of the automatic vending machine, at the same time that he will place the finger corresponding to a fingerprint stored on his card on the fingerprint detecting device. The fingerprint will be read and compared, in such a way that if the fingerprint coincides with the stored one, the machine will operate normally and on the contrary, the control and operating system will not be activated.

The chip-type cards with at least one fingerprint of the holder of the card stored in its electronic memory can include other details of the holder of the card.

In a varied embodiment of the invention, the fingerprint detecting device includes a memory wherein at least one fingerprint of all possible users of the machine have been stored, in such a way that when a user is going to make use of the machine the fingerprint detecting device will check the user's fingerprint with those stored in its memory for identification thereof. This embodiment is especially of interest when the use of the machine is restricted and the number of possible users of the machine is not very high.

In this way, the system is more economical, since the use of cards will not be necessary and hence we avoid the operations of storing the fingerprint on the card and distributing the cards and we also eliminate the card reader, etc.

In order to complement the description that is going to be made herein for the purpose of providing a better understanding of the characteristics of the invention, a set of drawings, in whose single finger the most characteristic details of the invention are represented in an illustrative and non-restrictive manner, is attached to this specification.

### BRIEF DESCRIPTION OF THE DRAWINGS

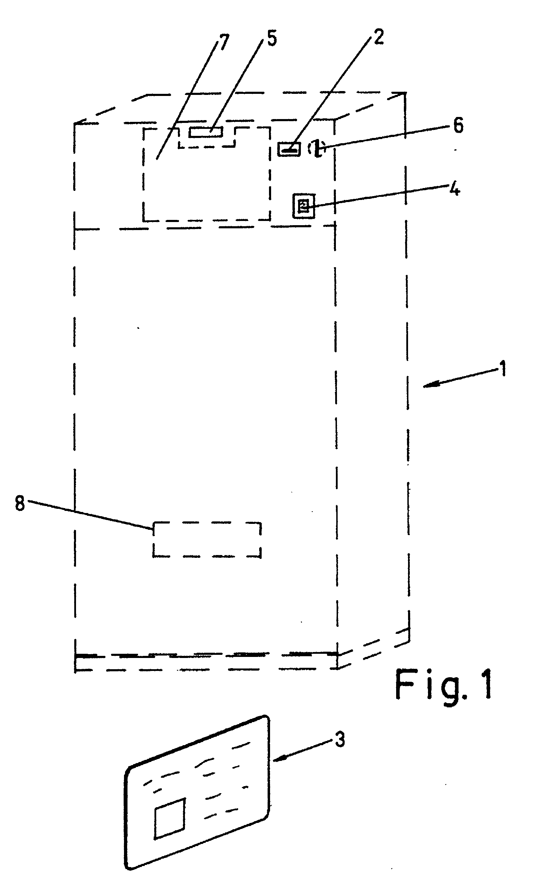

Figure 1 is a perspective view of a vending machine provided with a chip card reader and a fingerprint detecting device, as well as a chip card, in whose electronic memory the corresponding fingerprint has been stored.

### DESCRIPTION OF A PREFERRED EMBODIMENT

In view of the commented figure and in accordance with the numbering used, we can see how the machine (1) is of the automatic cigarette vending machine type and same includes the coin slot (6), the area (7) where the product selection pushbuttons are located, the receiving box (8) of the dispensed product and the display (5), in such a way that the machine, likewise, includes the respective electronic control and operating system.

Likewise, the automatic vending machine (1) comprises a chip-type card (3) reader (2) and a fingerprint detecting device (4), where the user should place a finger.

Hence, the user identification system defined by the chip-type card (3) reader (2) and the fingerprint detecting device (4) are connected to the electronic control and operating system of the machine itself.

The chip-type cards (3) include, stored in their memory, at least one of the holder's fingerprints, in such a way that the stored fingerprint of at least one holder on the corresponding chip-type card (3) with electronic memory is controlled to store fingerprints of authorized users for the purpose of obtaining the storage of fingerprints of people older than 18.

In order to identify a user's fingerprint, the user will insert his chip-type card (3) with a least one fingerprint stored in its electronic memory in the reader (2), at the same time that he places the finger corresponding to a fingerprint stored on its chip-type card (3) in the fingerprint detecting device (4), said incident being able to appear on the display (5).

Thus, once the fingerprint corresponding to the chip-type card (3) inserted in the reader (2) has been read and the detection of the fingerprint of the finger placed on the fingerprint detector (4) has been carried out, the control system will compare them, in such a way that if they coincide the machine (1) is activated for the acceptance and validation of the coins to be inserted and on the contrary, the machine will not be activated.

The chip-type cards (3) with at least one fingerprint of its holder stored in its electronic memory, can include other details of the holder of the card.

Likewise, the chip-type cards (3) can include in their memory fingerprints corresponding to several people and these people may use the same chip-type card (3) with electronic memory.

On the other hand, the fingerprint detecting device (4) is capable of including a memory in which at least one fingerprint of all the possible users of the machine have been stored, in such a way that when a user is going to make use of the machine the user's fingerprint will be checked with those stored in the memory thereof by means of the fingerprint detecting device.

In accordance with this embodiment, the machine (1) will not need to include the card reader (2), in such a way that this eliminates the use of cards, which involves the elimination of the storage and distribution of cards. This embodiment is especially of interest when the use of the machine (1) is restricted to few users.

Hence, when a user wishes to use the automatic vending machine he will directly place a finger on the detecting device (4), a finger whose fingerprint is stored in the memory of said detecting device (4), so that the fingerprint is compared with the previously stored fingerprints and the machine is or is not activated depending on whether or not the user is identified.

To conclude, we can indicate that the operating of the automatic vending machine with an activation card will be the following: the user inserts the chip-type card (3) with electronic memory where at least one fingerprint of a user has been stored in the reader (2), in such a way that the machine itself is capable, by means of the display to ask the user to place a finger, whose fingerprint is stored in the memory of the chip-type card (3) on the fingerprint detecting device (4).

Then, the electronic control and operating system verifies that the fingerprint read by the detecting device coincides with the fingerprint stored in on the card, in such a way that if both fingerprints coincide the machine is activated permitting the same, and on the contrary, the machine remains inactive.

On the other hand, the operating of an automatic vending machine without a chip-type card (3) will be the following: the user will place a finger on the fingerprint detecting device (4) and the fingerprint will be read in order to compare it with the fingerprints stored in the memory of the detecting device, in such a way that if the fingerprint coincides with any of the ones stored, the machine will permit the sale and on the contrary it will not.

In short, by means of the proposed system, an attempt is basically made to prevent people younger than 18 from purchasing cigarettes from automatic cigarette vending machines.

Likewise, by means of the proposed system an attempt is made to prevent the cited people younger than 18 from playing on slot machines, which will be usable only by people older than 18.

Of course, the described system may be included for the control of cards with electronic memory, cards which are used for other purposes such as credit cards and debit bank cards, in which case the automatic teller will be the one that includes the chip-type card reader (2), as well as in the cards issued by different companies, for the purpose of identifying the user prior to use of the card, in which case the cash register will include the chip-type card reader.

Likewise, the system is applicable for any other person control means by means of an identifying chip-type card.

## Claims

1. User identification system for automatic vending machines, being useful in all type of coin-operated automatic vending machines, and especially in cigarette vending machines and slot machines, which are provided with a control system controlled by a microprocessor, **characterized in that** the user identification system comprises the inclusion of a chip-type card (3) reader (2) with electronic memory and a fingerprint detecting device (4) in an automatic vending machine (1), the reader and the device being connected to the electronic control and operating system of the machine itself, whose chip-type cards (3) include, stored in their memory, at least one fingerprint of the holder of the card.

2. User identification system for automatic vending machines, according to claim 1, **characterized in that** the storage of at least one fingerprint of a holder on the corresponding chip-type card (3) with electronic memory is controlled to store fingerprints only of authorized users.

3. User identification system for automatic vending machines, according to claims 1 and 2, **characterized in that** in order to identify the fingerprint of a user, the user will insert his chip-type card (3), with at least one fingerprint stored in its electronic memory in the reader (2), at the same time that he places the finger corresponding to a fingerprint stored on his card on the fingerprint detecting device (4), which will proceed to read and compare said fingerprint.

4. User identification system for automatic vending machines, according to claims 1 and 3, **characterized in that** the chip-type cards (3) with at least one fingerprint of the holder of the card stored in its electronic memory, can include other details of the holder of the card.

5. User identification system for automatic vending machines, according to claim 1, **characterized in that** the fingerprint detecting device (4) itself includes a memory in which at least one fingerprint of all the possible users of the machine have been stored, in such a way that when a user is going to make use of the machine the fingerprint detector will compare the user's fingerprint with the fingerprints stored in its memory.

6. User identification system for automatic vending machines, according to claim 1, **characterized in that** a chip-type card (3) with electronic memory can be shared by several holders of the card, the card (3) including in its electronic memory at least one fingerprint of each one of the holders of the card.
